**Europäisches Patentamt**

**European Patent Office**

**Office européen des brevets**

(19)

(11) Numéro de publication : **0 566 513 A1**

(12) ## DEMANDE DE BREVET EUROPEEN

(21) Numéro de dépôt : **93460019.8**

(22) Date de dépôt : **16.04.93**

(51) Int. Cl.⁵ : **G07F 7/08**, G06F 15/20, G11C 8/00

(30) Priorité : **17.04.92 FR 9204972**

(43) Date de publication de la demande :
**20.10.93 Bulletin 93/42**

(84) Etats contractants désignés :
**BE CH DE GB IT LI NL**

(71) Demandeur : **INNOVATRON SA**
**137 boulevard de Sébastopol**
**F-75002 Paris (FR)**

(72) Inventeur : **Grieu, François**
**8-10 rue Rambouillet**
**F-75012 Paris (FR)**

(74) Mandataire : **Vidon, Patrice**
**Cabinet Patrice Vidon Immeuble Germanium**
**80, Avenue des Buttes de Coesmes**
**F-35700 Rennes (FR)**

(54) **Procédé pour débiter un objet portatif d'une pluralité de montants, objet portatif, dispositif de transfert et application correspondants.**

(57) Le domaine de l'invention est celui des transactions, et par exemple du paiement de biens ou de services, entre au moins un dispositif de transfert et au moins un objet portatif.

L'objectif de l'invention est de fournir un procédé de transaction optimisant la ressource mémoire d'un objet portatif, ou, en d'autres termes, permettant de minimiser le nombre d'éléments binaires nécessaires pour chaque débit.

Selon l'invention, on ne programme pas autant d'éléments binaires de la mémoire de l'objet portatif qu'il y a d'unités à débiter.

En effet, les éléments binaires ne sont plus considérés indépendamment, mais par champs. On fait appel à un code spécifique, permettant de coder dans chaque champ un nombre de valeurs unitaires supérieur au nombre d'éléments binaires composant ce champ. Avantageusement, chacun des montants à débiter est supérieur ou égal à un montant minimal M1 prédéterminé strictement supérieur à 1.

| 0 | 0 0 0 0 |
| 15 | 0 0 0 1 |
| 16 | 0 0 1 0 |
| 17 | 0 0 1 1 |
| 18 | 0 1 0 0 |
| 19 | 0 1 0 1 |
| 20 | 0 1 1 0 |
| 21 | 0 1 1 1 |
| 22 | 1 0 0 0 |
| 23 | 1 0 0 1 |
| 24 | 1 0 1 0 |
| 25 | 1 0 1 1 |
| 26 | 1 1 0 0 |
| 27 | 1 1 0 1 |
| 28 | 1 1 1 0 |
| 29 | 1 1 1 1 |

Fig. 1

**EP 0 566 513 A1**

Le domaine de l'invention est celui des transactions, et par exemple du paiement de biens ou de services, entre au moins un dispositif de transfert et au moins un objet portatif.

Par objet portatif on entend tout moyen pouvant être utilisé comme support d'une valeur prépayée, et par exemple une carte à mémoire. De façon classique, de tels objets portatifs comportent une mémoire composée d'un nombre fini d'éléments binaires de codage programmables de manière irréversible. Un débit peut alors être effectué par consommation d'éléments binaires composant cette mémoire.

Cet objet portatif est généralement acquis par un utilisateur dans un état initial, où il est réputé avoir une certaine valeur. Cette valeur diminue au fil des transactions successives, par programmation des éléments binaires de sa mémoire.

Au moment d'une transaction, l'objet portatif est mis en communication avec un dispositif de transfert, qui effectue cette programmation. Souvent, ce dispositif de transfert coopère avec un moyen de délivrance du bien ou du service pour le paiement duquel l'objet portatif est utilisé.

Généralement, un dispositif de transfert comporte :
- des moyens de lecture de l'état des éléments binaires de la mémoire de l'objet portatif ;
- des moyens de calcul de la valeur résiduelle de l'objet portatif en fonction de l'état des éléments binaires ;
- des moyens d'écriture qui, à l'issue d'une transaction, programment des éléments binaires de façon que la valeur résiduelle de l'objet portatif soit égale à la valeur avant la transaction diminuée de la valeur de la transaction. La nouvelle valeur de l'objet portatif est obligatoirement inférieure à la valeur avant la transaction. Cette condition est nécessaire pour garantir l'infraudabilité du système;
- des moyens de contrôle de l'écriture, permettant de s'assurer que l'opération d'écriture s'est effectuée correctement.

Dans la plupart des procédés de transaction connus, une valeur unitaire unique est associée à chaque élément binaire constituant la mémoire de l'objet portatif. C'est par exemple le cas des procédés utilisés pour le paiement de taxes téléphoniques.

Dans ce cas, le calcul de la valeur de l'objet portatif consiste à compter le nombre d'éléments binaires susceptibles d'être programmés, et l'inscription d'un débit consiste à programmer un nombre d'éléments binaires égal au montant à débiter, ces éléments binaires étant choisis selon une méthode quelconque.

Cette solution est bien adaptée à certaines situations, telles que celles mentionnées ci-dessus. Plus généralement, elle s'avère avantageuse dans les cas où les transactions portent le plus souvent sur des montants peu importants, et pouvant être unitaires.

Cette solution est en revanche coûteuse en ressource mémoire et limite la valeur initiale de l'objet portatif.

Elle ne peut pas, ou difficilement, être utilisée dans de nombreux domaines, et en particulier lorsque l'on souhaite débiter des montants relativement élevés exprimés dans une monnaie donnée. On conçoit en effet que, dans ce cas, un élément binaire doit représenter une fraction faible de cette monnaie (par exemple un dixième ou la moitié de l'unité monétaire), de façon à pouvoir débiter tout montant. En revanche, la plupart des montants que l'on débitera seront très supérieurs à cette fraction monétaire. En conséquence, le moindre débit entrainera la consommation d'un nombre élevé d'éléments binaires.

Or, d'une manière générale, le coût de fabrication d'un objet portatif est fonction croissante du nombre d'éléments binaires de la mémoire.

On a tenté de pallier cet inconvénient, en structurant le contenu de la mémoire de l'objet portatif. Plus précisément, ainsi que cela est notamment décrit dans la demande de brevet EP 0 345 108, on a pensé à séparer la mémoire en plusieurs sous-ensembles et à affecter à chaque sous-ensemble une valeur unitaire distincte pour le codage des éléments binaires.

Ainsi, tout montant devant être débité est décomposé en fonction des différentes valeurs unitaires, puis est inscrit dans les champs correspondant à ces valeurs. Les valeurs unitaires sont souvent des puissances de 2 d'une valeur unitaire de base choisie.

Ces procédés ne permettent toutefois qu'un gain limité en ressource mémoire.

L'invention a notamment pour objectif de pallier ces différents inconvénients de l'état de la technique.

Plus précisément, un objectif de l'invention est de fournir un procédé de transaction optimisant la ressource mémoire d'un objet portatif, ou, en d'autres termes, permettant de minimiser le nombre d'éléments binaires nécessaires pour chaque débit.

Un autre objectif de l'invention est de fournir un tel procédé permettant de maximiser la valeur initiale de l'objet portatif.

L'invention a également pour objectif de fournir un tel procédé qui soit simple et peu coûteux à mettre en oeuvre, tant en ce qui concerne les dispositifs de transfert ques les objets portatifs associés.

Un autre objectif de l'invention est de fournir un tel procédé permettant d'effectuer des débits de façon exacte ou sensiblement exacte, c'est-à-dire ne nécessitant pas la programmation d'un montant supérieur à celui qui doit effectivement être débité.

L'invention a encore pour objectif de fournir un tel procédé qui limite le plus possible les risques de fraude.

Un autre objectif de l'invention est de fournir un tel procédé permettant de consommer toute la valeur d'un objet portatif, sans risque de perte d'une valeur résiduelle, même minime.

Ces objectifs, ainsi que d'autres qui apparaîtront par la suite, sont atteints selon l'invention à l'aide d'un procédé de transaction, du type mettant en oeuvre au moins un dispositif de transfert et au moins un objet portatif, ledit objet portatif comportant une mémoire composée d'un nombre fini d'éléments binaires de codage susceptibles d'être programmés de manière de manière irréversible par ledit dispositif de transfert, de façon à débiter ledit objet portatif d'une pluralité de montants M entiers,

procédé selon lequel :
- au moins une partie de ladite mémoire est fractionnée en au moins deux champs comprenant chacun plus d'un élément binaire de codage ;
- une table de codage est affectée à chacun desdits champs, ladite table de codage associant une valeur distincte à au moins certaines des combinaisons binaires programmables dans ledit champ, le nombre de valeurs distinctes de ladite table de codage étant supérieur au nombre d'éléments binaires dudit champ, et associant une valeur nulle à la combinaison binaire correspondant à la non-programmation de tous les éléments binaires d'un champ ;
- ledit dispositif de transfert débite ledit objet portatif, pour chaque montant M à débiter, en programmant dans un ou plusieurs desdits champs des combinaisons binaires telles que la somme des valeurs associées aux combinaisons binaires programmées dans l'ensemble desdits champs après le débit est égale à la somme dudit montant M à débiter et des valeurs associées aux combinaisons binaires programmées avant ledit débit.

Ainsi, on ne programme pas autant d'éléments binaires de la mémoire de l'objet portatif qu'il y a d'unités à débiter. Au contraire, on code des valeurs numériques sur un nombre réduit d'éléments binaires, ces valeurs étant représentatives du nombre d'unités à débiter.

L'invention repose donc sur une approche tout à fait nouvelle du problème de l'inscription de montants dans un support portatif à mémoire. En effet, l'homme du métier a toujours associé à un élément binaire une valeur unitaire donnée.

En d'autres termes, dans les procédés connus, la programmation d'un élément binaire correspond au débit d'une valeur unitaire.

Selon l'invention, les éléments binaires ne sont plus considérés indépendamment, mais par champs. On fait appel à un code spécifique, permettant de coder dans chaque champ un nombre de valeurs unitaires supérieur au nombre d'éléments binaires composant ce champ. Il n'y a plus corrélation directe entre un élément binaire et la valeur unitaire du codage.

Avantageusement, chacun desdits montants M à débiter est supérieur ou égal à un montant minimal M1 prédéterminé strictement supérieur à 1, et chacune desdites valeurs distinctes est strictement supérieure à 1.

Cette caractéristique de l'invention est particulièrement avantageuse, en ce qui concerne l'optimisation de la ressource mémoire des objets portatifs.

L'homme du métier a en effet toujours considéré que la possibilité de débiter des montants dans une unité donnée impliquait la nécessité de pouvoir débiter un montant égal à cette unité. Cette condition entraine systématiquement le codage d'un nombre important d'éléments binaires à chaque débit.

L'invention pose donc un problème nouveau, à savoir le codage de montants tous supérieurs à un montant minimal donné (qui s'oppose à celui, classique, de l'optimisation d'un débit d'un ensemble de valeurs unitaires), et y apporte une solution très efficace, permettant d'augmenter fortement la valeur nominale d'un objet portatif de taille mémoire donnée.

Préférentiellement, ledit montant minimal M1 prédéterminé est choisi de façon que tous les montants entiers compris entre M1 et (2*M1)-1 puissent être débités dans un seul desdits champs.

Dans un mode de réalisation préférentiel de l'invention, lesdits montants M à débiter sont des fractions ou des multiples d'une unité donnée, telle qu'une unité monétaire, et ledit procédé comprend une étape préalable de détermination dudit montant M à débiter, à partir d'une valeur correspondante exprimée dans ladite unité donnée.

De façon classique, dans le cas de la monnaie française, cette fraction pourra par exemple correspondre à 0,10, 0,20 ou 0,50 Franc.

De façon avantageuse, le procédé selon l'invention comprend une étape de détermination de la valeur résiduelle VR dudit objet portatif, par soustraction de la somme des montants déjà débités à une valeur nominale VN prédéterminée dudit objet portatif.

Il s'agit d'une caractéristique très importante de l'invention. Il est ainsi particulièrement aisé de déterminer la valeur résiduelle de la carte.

Cela peut notamment permettre d'autoriser un débit, si le montant M de celui-ci est inférieur ou égal à ladite valeur résiduelle VR.

Préférentiellement, ladite valeur résiduelle VR prend une valeur nulle, lorsque ladite soustraction donne un résultat négatif. Ledit objet portatif est alors réputé épuisé.

Dans un mode de réalisation particulier de l'invention, ladite valeur nominale VN prédéterminée est sensiblement égale au produit dudit montant minimal M1 prédéterminé par le nombre C de champs de ladite mémoire.

Ainsi qu'on le verra par la suite, cette valeur nominale peut notamment être supérieure, de quelques unités, à ce produit.

Il est à noter par ailleurs que cette valeur nominale ne correspond pas obligatoirement au coût d'acquisition de l'objet portatif. On peut par exemple prévoir qu'il soit d'un coût légèrement inférieur à la valeur nominale, dans un but commercial, ou supérieur, pour inclure un coût de fonctionnement.

Dans un mode de réalisation avantageux de l'invention, lorsque ladite valeur résiduelle VR est inférieure audit montant minimal M1, un dernier débit ést effectué en programmant dans un desdits champs des éléments binaires de façon que ladite valeur résiduelle VR prenne la valeur 0.

Ainsi, on évite une perte de la valeur résiduelle d'un objet portatif (reliquat), le dernier débit pouvant être quelconque, dans la limite de la valeur résiduelle. Ce reliquat peut notamment être transféré dans un autre objet portatif.

Avantageusement, lesdites valeurs distinctes associées à au moins certaines de combinaisons binaires programmables dans un champ comprenant N éléments binaires sont égales à :

$$M1 - 1 + \sum_{i=0}^{N-1} b_i . 2^i$$

$b_i$ représentant un desdits éléments binaires et valant 1 si ledit élément binaire est programmé et 0 dans le cas contraire.

De cette façon, $2^N$-1 valeurs distinctes sont susceptibles d'être débitées dans chaque champ, en utilisant seulement N éléments binaires.

Préférentiellement, le débit d'un montant M est effectué de façon à inscrire un nombre minimum de champs et à programmer un nombre minimum d'éléments binaires.

Il est clair en effet qu'il est souhaitable de limiter le nombre de champs utilisés, notamment de façon à faciliter le traitement des débits suivants. Par ailleurs, et en particulier lorsqu'on prévoit, ainsi qu'on le verra par la suite, de pouvoir coder plusieurs débits dans un même champ, il est préférable de limiter le nombre d'éléments binaires programmés.

Dans un mode de réalisation avantageux de l'invention, on prévoit au moins un champ annexe affecté d'une table de codage associant à au moins une des combinaisons binaires programmables dans ledit champ annexe une valeur inférieure audit montant minimal M1.

Avantageusement, ledit champ annexe permet une gestion exacte de reliquats provenant d'autres objets portatifs.

Préférentiellement, ladite mémoire comporte au moins deux types de champs, comprenant respectivement N et N + 1 éléments binaires.

Cela permet d'augmenter d'une part la valeur initiale de l'objet portatif, et d'autre part la souplesse dans le choix du débit minimal.

Dans ce cas, il est avantageux que la structuration de ladite mémoire en champs de N et N + 1 éléments binaires soit dynamique, en fonction du nombre d'éléments binaires non programmés restant disponibles dans ladite mémoire et des montants M à débiter.

De façon préférentielle, et en fonction des applications, le nombre d'éléments binaires constituant chacun desdits champs est compris entre 2 et 6 inclus.

Dans un premier mode de réalisation particulier de l'invention, chacun desdits champs ne peut être inscrit qu'une seule fois.

Dans un second mode de réalisation particulier de l'invention, chacun desdits champs est susceptible d'être inscrit plusieurs fois, la première inscription assurant la programmation d'au moins un desdits éléments binaires, et les inscriptions suivantes n'étant possibles que pour des combinaisons binaires ne nécessitant pas la programmation d'éléments binaires déjà programmés.

Dans ce dernier cas, il est possible d'optimiser le rendement (utilisation du plus grand nombre d'éléments binaires), au prix d'une légère augmentation de le complexité du procédé.

L'invention concerne bien sûr également les objets portatifs et les dispositifs de transfert mis en oeuvre dans ce procédé.

Le procédé de l'invention s'applique avantageusement au règlement de transactions de biens ou de services dans de très nombreux domaines. Par exemple, il peut être mis en oeuvre pour la vente de journaux. Il est en effet aisé de déterminer un montant minimal (le coût de tout journal étant supérieur à ce montant minimal).

D'autres caractéristiques et avantages de l'invention apparaîtront à la lecture de la description suivante de trois modes de réalisation préférentiels de l'invention, donnés à titre d'exemple indicatif et non limitatif, et des dessins annexés, dans lesquels :

- les figures 1, 2 et 3 présentent chacune un schéma simplifié de trois modes de réalisation d'un procédé selon l'invention :
  - la figure 1 correspondant au cas où tous les champs comprennent le même nombre d'éléments binaires et sont associés à la même table de codage ;
  - la figure 2 correspondant au cas où le premier champ est attribué à la gestion des reliquats et possède une table de codage spécifique ;
  - la figure 3 correspondant au cas où le nombre d'éléments binaires attribués à chaque champ est variable, chaque type de champs étant associé à une table de codage spécifique ;
- la figure 4 illustre une application particulière de l'invention, à savoir la distribution de journaux

Le procédé décrit ci-dessous est destiné à être mis en oeuvre dans un objet portatif, une carte à mémoire par exemple, destiné au paiement de biens ou de services, et notamment de journaux. Il est clair toutefois qu'il peut être aisément adapté à de nombreuses autres applications, sans sortir du cadre de l'invention.

Ainsi que cela est illustré en figure 4, il s'agit donc d'utiliser un objet portatif 41 (appelé carte par la suite) comme moyen de paiement d'un journal 42. Au moment de la transaction, la carte 41 est insérée 43 dans un dispositif de transfert 44 coopérant 45 généralement avec des moyens de délivrance 46 du journal 42. Chaque transaction correspond à un débit d'un montant supérieur ou égal au prix du journal le moins cher (montant minimal susceptible d'être débité).

Afin de simplifier les explications, on décrit par la suite des exemples numériques particuliers. L'invention ne se limite évidemment pas à ces valeurs numériques, l'homme du métier pouvant aisément généraliser ces exemples, et passer de ces valeurs à des valeurs différentes.

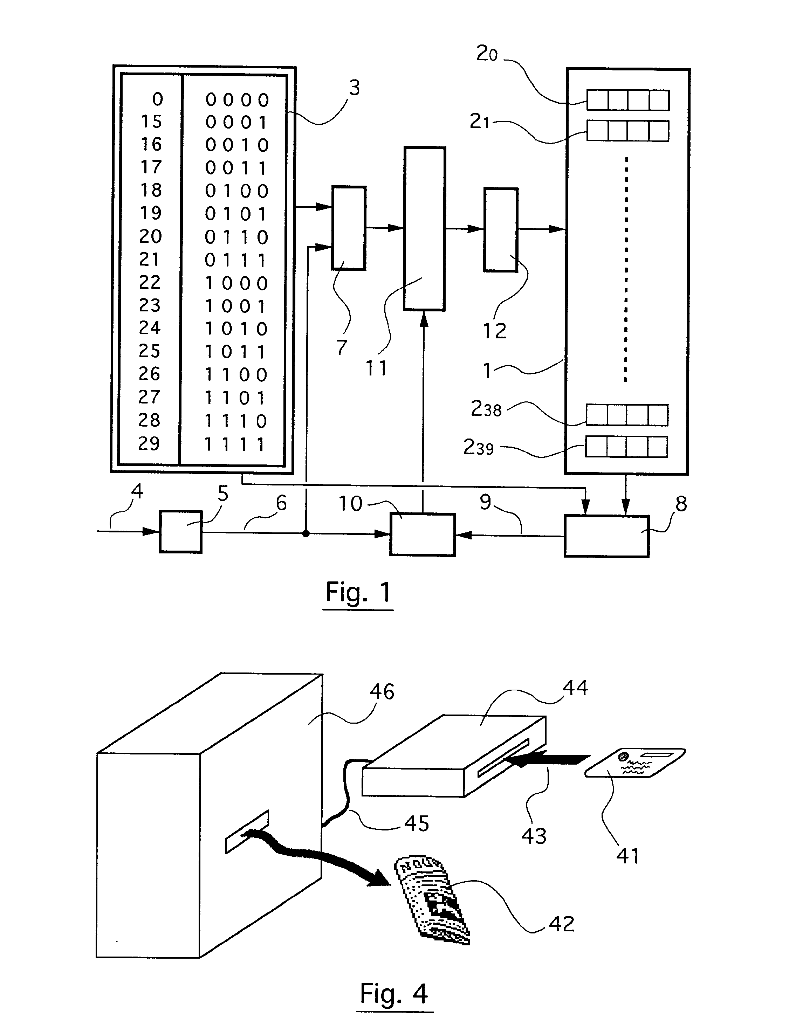

Dans le premier mode de réalisation d'un procédé selon l'invention, expliqué en relation avec la figure 1, la carte comprend une zone 1 de mémoire d'une capacité de 160 éléments binaires (e.b. par la suite). Cette mémoire est fractionnée en 40 champs $2_0$ à $2_{39}$ fixes de 4 e.b.

On considère des débits par unité de 0,10 F. Le montant minimal d'un débit est M1 = 15 unités ($2^4$-1) ce qui correspond à un prix plancher des journaux de 1,50 F. D'autres valeur unitaire et montant minimal peuvent bien sûr être choisis.

On doit donc pouvoir effectuer tout débit d'un montant entier supérieur ou égal à 15 unités, à concurrence de la valeur résiduelle de la carte (valeur associée à l'état des éléments binaires de la mémoire, comme on le verra par la suite).

Dans ce premier mode de réalisation, on affecte la même table de codage 3 à tous les champs $2_0$ à $2_{39}$. Cette table de codage 3 associe une valeur distincte à chaque combinaison binaire programmable dans un champ :

- la valeur 0 est associée à la combinaison binaire 0000 correspondant à la non-programmation de tous les éléments binaires d'un champ,
- les combinaisons binaires comprises entre 0001 et 1111 sont associées respectivement aux valeurs comprises entre M1 = 15 et 2M1 - 1 = 29.

En d'autres termes, la table de codage 3 met en oeuvre le code associant aux différentes combinaisons binaires la valeur suivante :

$$M1-1+\sum_{i=0}^{N} b_i.2^i$$

où N est le nombre d'e.b. du champ considéré (ici, N = 4), bi représente les éléments binaires, valant 1 si l'e.b. est programmé et 0 sinon. Le terme table de codage ne doit pas être limité à son sens strict. Il est clair en effet que cette table peut être avantageusement remplacée par différents moyens de calcul, mettant en oeuvre la formule précédente. Par ailleurs, l'homme du métier pourra trouver de nombreuses autres façons d'effectuer un tel codage, avec des formules différentes.

Un champ dans ce premier exemple comprenant 4 e. b., il y a donc $2^4$ = 16 valeurs distinctes possibles :

la valeur 0 et les 15 premières valeurs supérieures ou égales au montant minimal M1 (de 15 unités à 29 unités).

Par exemple, à la valeur 26, la table 3 associe les 4 e.b. 1100.

Lors d'une transaction, le procédé comprend les étapes suivantes :

- transformation (5) du montant 4 à débiter en francs (ou tout autre unité monétaire) en un montant 6 en unités de 0,10 F. Plus généralement, cette transformation correspond à une division ou multiplication du montant 4, en fonction de l'unité considérée par la carte ;
- détermination (7) d'une ou plusieurs combinaisons binaires à programmer en fonction du montant 6 en unités de 0,10 F d'une part et de la table de codage 3 d'autre part (plusieurs combinaisons binaires, correspondant à plusieurs champs, sont nécessaires lorsque le montant est supérieur à la valeur maximum susceptible d'être codée dans un champ (ici : 29)).
- calcul (8) de la valeur résiduelle 9 de la carte en fonction de l'état des éléments binaires de la mémoire 1 ;
- autorisation (10) du débit si le montant 6 à débiter est inférieur ou égal à la valeur résiduelle 9 ;
- sélection (11) des champs $2_0$ à $2_{39}$ dans lesquels peuvent être programmées la ou les combinaisons binaires déterminées auparavant (7) ;
- programmation (12) des éléments binaires des champs sélectionnés.

Par exemple, si un journal coûte 4,50 F (montant 4 à débiter en francs), le montant 6 correspondant en unités de 0,10 F est 45 unités. D'après la table de codage 3, un tel montant 6 peut être codé à l'aide de deux combinaisons binaires dont la somme des valeurs correspondantes donne 45 unités. Ces deux combinaisons binaires sont, par exemple, 0110 et 1011 (correspondant respectivement à 20 et 25 unités).

Il est à noter que plusieurs couples de combinaisons binaires permettent d'obtenir le même résultat. On peut prévoir que la détermination 7 fonctionne de façon à optimiser un critère donné, tel que, par exemple, codage d'une valeur la plus grande possible dans un des champs, limitation du nombre d'e.b. à programmer, etc...

De façon avantageuse, on peut distinguer trois cas pour organiser automatiquement le débit d'un montant donné dans le nombre de champs adéquat:

cas 1 : le montant à débiter est compris entre le montant minimal et le montant maximal d'un champ (par exemple entre 15 et 29 dans l'exemple $23_B$ de la figure 1) : on débite alors ce montant dans un seul champ ;

cas 2 : le montant n à débiter est compris entre le débit maximum d'un champ + 1 (soit encore deux fois le débit minimum : 29 + 1 = 2 x 15) et deux fois le débit maximum d'un champ (en l'occurence 2 x 29 = 58) : on débite la partie entière de (n/2) dans un premier champ, et le solde (n - partie entière (n/2)) dans un second champ ;

cas 3 : le montant à débiter est supérieur à deux fois le montant maximum d'un champ : on débite alors à leur valeur maximale (29) autant de champs que nécessaire, pour se retrouver avec un solde compris entre deux fois le débit minimum et deux fois le débit maximum d'un champ, à répartir dans deux derniers champs comme indiqué au cas 2.

Le calcul (8) de la valeur résiduelle 9 de la carte comprend les étapes suivantes :

- lecture de l'état des éléments binaires de chaque champ $2_0$ à $2_{39}$ ;
- détermination, à l'aide de la table de codage 3, de la valeur associée à chaque champ $2_0$ à $2_{39}$ ;
- addition de l'ensemble de ces valeurs, le résultat de cette addition donnant le montant total de l'ensemble des débits déjà effectués ;
- soustraction de ce montant total à la valeur initiale prédéterminée (valeur nominale VN) de la carte, le résultat de cette soustraction donnant directement la valeur résiduelle (VR) de la carte s'il est positif. La valeur résiduelle de la carte est nulle dans les autres cas.

Par exemple, avec un montant minimal M1 = 15 unités et un nombre de champs égal à 40, la valeur initiale maximale de la carte est : 40 ∗ 15 = 600 unités.

Cette valeur (600 unités pour 160 éléments binaires) correspond à un gain d'un facteur 3,7 (600/160) par rapport au codage classique naïf "programmant autant d'éléments binaires qu'il y a d'unités à débiter (160 unités pour 160 éléments binaires).

Dans l'exemple précédent, le débit d'un montant de 45 unités n'est autorisé que si la valeur résiduelle de la carte est supérieure ou égale à ce montant.

Lorsqu'un débit est autorisé, on parcourt la mémoire 1 à la recherche du premier champ $2_0$ à $2_{39}$ "vide", c'est-à-dire le premier champ dont les éléments binaires n'ont pas été programmés et sont toujours codés 0000. Dans ce premier champ, on inscrit la première combinaison binaire 0110 déterminée auparavant.

Puis on parcourt la mémoire 1 à la recherche du second champ $2_0$ à $2_{39}$ "vide",et on y inscrit la seconde combinaison binaire 1011 déterminée auparavant.

L'inscription d'une combinaison binaire dans un champ consiste à programmer les éléments binaires de ce champ. Cette programmation correspond à un changement d'état irréversible (par claquage d'un fusible, par exemple). Cela signifie qu'il est technologiquement impossible (ou économiquement non rentable) de redonner à ces éléments binaires leur état original. Cela garantit l'infraudabilité du système.

Dans ce premier mode de réalisation, le montant du dernier débit ne peut être assujetti au minimum M1. En effet, on doit pouvoir utiliser la valeur résiduelle de la carte même si celle-ci est inférieure à ce montant minimal M1.

Lors de la transaction correspondant au dernier débit, on programme tous les éléments binaires d'un champ vide sélectionné (d'autres solutions sont envisageables, et notamment la programmation d'un ou plusieurs e.b. dans un ou plusieurs champs déjà programmés). Ainsi, la valeur résiduelle de la carte devient nulle puisque la somme des montants de tous les débits effectués (y compris le montant codé lors du dernier débit) est supérieur à la valeur initiale de la carte.

Par exemple, une carte de valeur initiale égale à 600 unités, ayant déjà été débitée de 595 unités, est débitée une dernière fois en inscrivant la combinaison binaire 1111 (programmation de tous les e.b.) dans un champ vide. Cette combinaison binaire correspondant à la valeur 29, la soustraction du montant total débité (595 + 29 = 624 unités) à la valeur initiale de la carte (600 unités) donne un résultat négatif (-24). Par conséquent, la valeur résiduelle de la carte est nulle.

Ainsi, il est possible d'utiliser complètement la carte, quelle que soit la suite de débits effectués. Il suffit que tous les débits soient de montant supérieur ou égal au montant minimal M1, sauf le dernier qui peut être quelconque dans la limite de la valeur résiduelle.

Tout en conservant la même taille de champs, on peut choisir un montant minimal M1 plus faible, ce qui conduit à réduire la valeur initiale de la carte (la nouvelle valeur initiale étant égale au nombre de champ multiplié par le nouveau montant minimal M1), et à adapter la table de codage.

On peut également choisir une valeur initiale de la carte plus faible.

Par contre, si l'on prend un montant minimal M1 plus élevé, il faut augmenter la taille des champs (c'est-à-dire le nombre d'éléments binaires de chaque champ), sinon on ne peut pas représenter un montant compris entre la valeur maximale susceptible d'être codée dans un champ et deux fois la valeur minimale M1.

En d'autres termes, le montant minimal M1 doit être choisi, pour assurer une continuité, de façon que l'on puisse coder dans chaque champ au moins les montants compris entre M1 et 2M1 - 1.

De même, si l'on augmente la valeur de la carte sans modifier la taille des champs, ni la table de codage (avec toujours 160 e.b. sur la carte), on n'est plus capable de garantir la possibilité de faire les derniers débits. Par exemple, une carte de valeur initiale 650 unités, comprenant 40 champs et ayant déjà été débitée 40 fois de M1 = 15 unités, ne possède plus de champs vide permettant un nouveau débit. Par conséquent, 50 unités prépayées (650-600) par l'acheteur de la carte ne sont pas utilisables.

Dans ce premier mode de réalisation, le montant du dernier débit n'est pas assujetti au minimum M1. Toutefois, l'utilisation de la carte lors de ce dernier débit est très limitée puisque le montant de ce débit doit être inférieur ou égal à la valeur résiduelle de la carte.

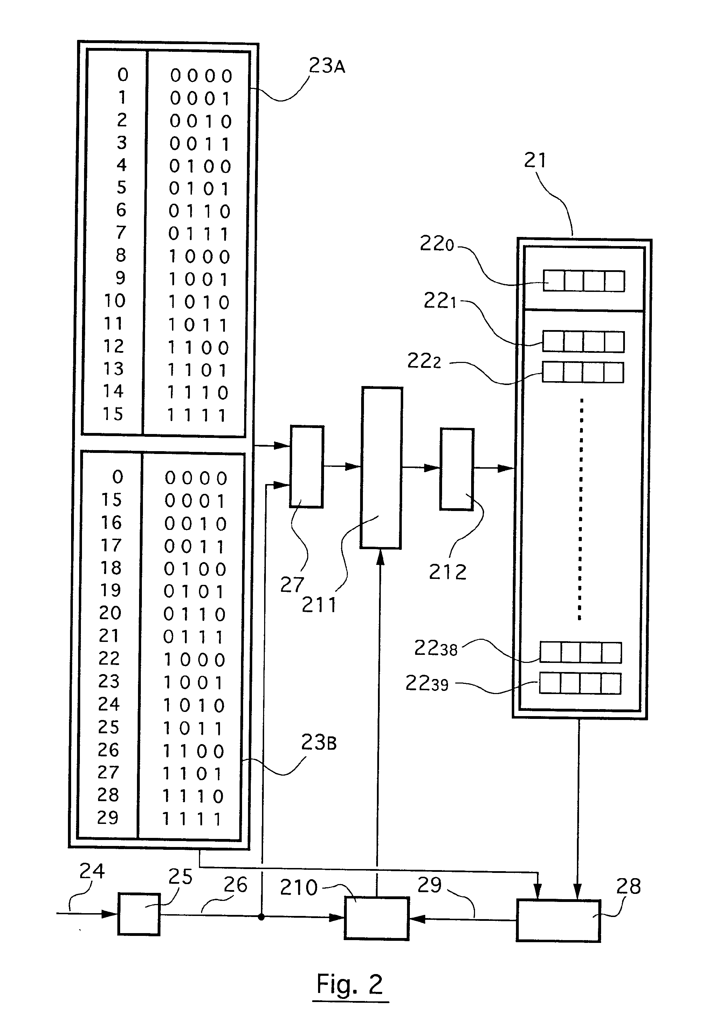

Le second mode de réalisation d'un procédé selon l'invention, expliqué en relation avec la figure 2, permet de pallier cet inconvénient.

On utilise une seconde carte lorsque la première est entièrement débitée. Suite au dernier débit de la première carte, le montant du premier débit de la seconde carte est tel que la somme de ces deux débits est égale au montant de l'achat effectué.

Par exemple, un achat d'un montant égal à 15 unités, alors que la valeur résiduelle de la première carte est 5 unités, est effectué en débitant la première carte de ses 5 dernières unités (dernier débit de la première carte), puis en débitant la seconde carte de 10 unités (premier débit de la seconde carte). Un champ spécial, ou annexe, est prévu dans chaque carte à cet effet.

Cette solution permet de gérer les reliquats de carte à l'unité près. Lors du dernier débit d'une carte, le montant d'un achat n'est pas limité à la valeur résiduelle de cette carte.

La carte comprend une zone 21 mémoire d'une capacité de 160 éléments binaires. Cette mémoire est fractionnée en 40 champs $22_0$ à $22_{39}$ de taille fixe de 4 e.b.

On considère toujours des débits par unités de 0,10F, le montant minimal d'un débit étant M1 = 15 unités $(2^4-1)$.

Dans ce second mode de réalisation, on affecte une première table de codage $23_A$ au premier champ $22_0$. Cette première table de codage $23_A$ associe une combinaison binaire distincte à chacune des valeurs comprises entre 1 et M1 = 15 unités.

On affecte une seconde table de codage $23_B$ à tous les autres champs $22_1$ à $22_{39}$. Cette seconde table de codage $23_B$ associe :
- d'une part une combinaison binaire (comprise entre 0001 et 1111) à chacune des valeurs comprises entre M1 = 15 et 2M1-1 = 29, et

- d'autre part la combinaison binaire 0000 à la valeur 0 (non-programmation des e.b.).

Si le montant du premier débit d'une carte est compris entre 1 et M1, le procédé comprend les étapes suivantes :

- transformation (25) du montant 24 à débiter en francs en un montant 26 en unités de 0,10 F ;
- détermination (27) d'une combinaison binaire à programmer en fonction du montant 26 en unités de 0,10 F d'une part et de la première table de codage $23_A$ d'autre part ;
- calcul (28) de la valeur résiduelle 29 de la carte en fonction de l'état des éléments binaires de tous les champs $22_0$ à $22_{39}$ de la mémoire 21 ;
- autorisation (210) du débit si le montant 26 à débiter est inférieur ou égal à la valeur résiduelle 29 ;
- programmation (212) des éléments binaires du premier champ $22_0$.

L'exemple précédent, dans lequel le montant du premier débit de la seconde carte est égal à 10 unités (et donc compris entre 1 et M1), correspond à ce cas. D'après la première table de codage $23_A$, la combinaison binaire programmée dans le premier champ $22_0$ est 1010.

Si le montant du premier débit d'une carte est supérieur à M1, le procédé comprend les étapes suivantes ;

- transformation (25) du montant 24 à débiter en francs en un montant 26 en unités de 0,10 F ;
- détermination :
  * d'une part de la combinaison binaire 0001 correspondant à la valeur 1, à l'aide de la première table de codage $23_A$, et
  * d'autre part de la ou des combinaisons binaires correspondant au montant du débit moins une unités (c'est-à-dire moins l'unité codée précédemment), à l'aide de la seconde table de codage $23_B$ ;
- calcul (28) de la valeur résiduelle 29 de la carte en fonction de l'état des éléments binaires de tous les champs $22_0$ à $22_{39}$ de la mémoire 21 ;
- autorisation (210) du débit si le montant 26 à débiter est inférieur ou égal à la valeur résiduelle 29 ;
- sélection (211) des champs $22_1$ à $22_{39}$ autres que le premier, dans lesquels peuvent être programmés la ou les combinaisons binaires déterminées à l'aide de la seconde table de codage $23_B$ ;
- programmation (212) des éléments binaires du premier champ $22_0$ (combinaison binaire 0001) et des éléments binaires des autres champs sélectionnés.

Par exemple, si le montant du premier débit d'une carte est égal à 25 unités, la combinaison binaire programmée dans le premier champ est 0001 (correspondant à 1 unité), et la combinaison binaire programmée dans un autre champ sélectionné est 1010 (correspondant à 25 - 1 = 24 unités).

Par exemple, avec un montant minimal M1 = 15 unités, un premier champ $22_0$ réservé au premier débit et tous les autres champs utilisables lors de n'importe quel débit, la valeur initiale maximale de la carte est : 1 + 15 * 39 = 586 unités (1 champ annexe et 39 champs "normaux").

Cette valeur correspond à un premier débit de 1 unité puis à 39 débits de 15 unités.

La valeur initiale ne peut être supérieure à cette valeur, sinon on ne peut pas garantir la possibilité de faire les derniers débits.

Par ailleurs, cette valeur (586 unités pour 160 e.b.) correspond à un gain d'un facteur 3,6 (586/160) par rapport au codage naïf (586 unités pour 586 e.b.).

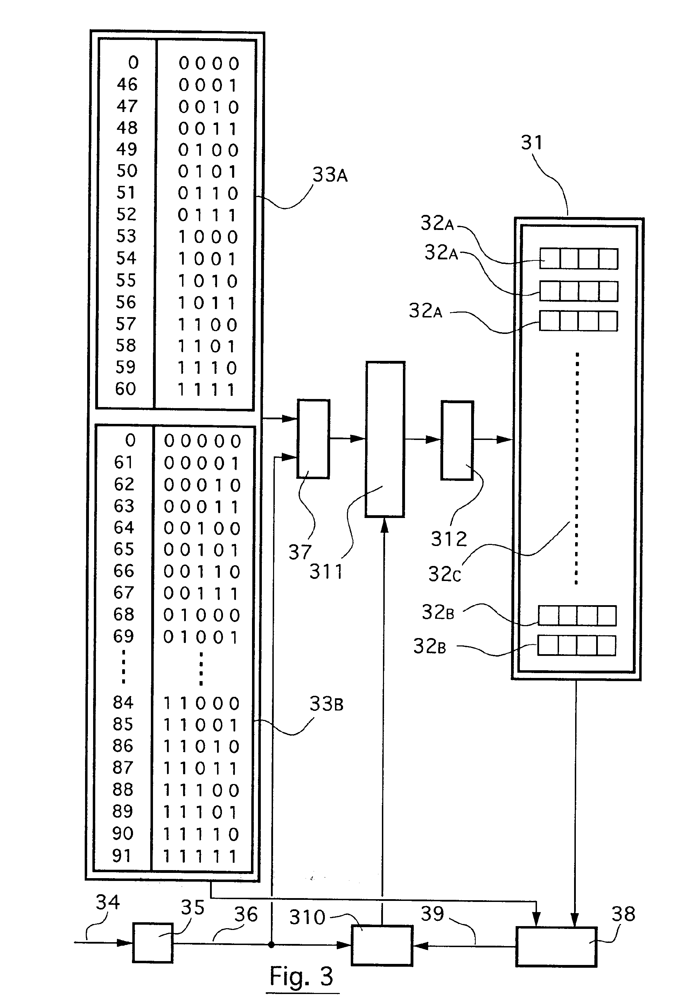

Le troisième mode de réalisation d'un procédé selon l'invention est expliqué en relation avec la figure 3.

Dans ce mode de réalisation, la zone 31 de mémoire d'une capacité de 160 éléments binaires comporte deux types de champs, comprenant respectivement N = 4 et N + 1 = 5 éléments binaires.

Les champs $32_A$ comprenant N = 4 éléments binaires sont situés dans la partie haute de la zone 31 de mémoire de la carte. Les champs $32_B$ comprenant N = 5 éléments binaires sont situés dans la partie basse de la zone 31 de mémoire de la carte.

Les éléments binaires non-programmés constituent une zone frontière $32_C$ permettant de séparer les deux types de champs précédents.

On considère des débits par unité de 0,10 F. Le montant minimal d'un débit est M1 = $(2^N-1)$ + $(2^{N+1}-1)$ = 46 unités, ce qui correspond à un prix plancher des journaux de 4,60 F.

On affecte aux champs $32_A$ de N = 4 e.b. une première table de codage $33_A$ associant :

- d'une part une combinaison binaire comprise entre 0001 et 1111 à chacune des valeurs comprises entre 46 unités (M1) et 60 unités, et
- d'autre part la combinaison binaire 0000 à la valeur 0 (non-programmation).

On affecte une seconde table de codage $33_B$ aux champs $32_B$ de N = 5 e.b. Cette seconde table de codage $33_B$ associe :

- d'une part une combinaison binaire comprise entre 00001 et 11111 à chacune des valeurs comprises entre 61 unités et 2M1-1 = 91 unités, et
- d'autre part la combinaison binaire 00000 à la valeur 0 (non-programmation des e.b.).

Lors d'une transaction, le procédé comprend les étapes suivantes :

8

- transformation (35) du montant 34 à débiter en un montant 36 en unités de 0,10 F ;
- détermination (37) d'une ou plusieurs combinaisons binaires à programmer en fonction du montant 36 en unités de 0,10 F d'une part et des deux tables de codages $33_A$ et $33_B$ d'autre part ;
- calcul (38) de la valeur résiduelle 39 de la carte en fonction d'état des éléments binaires de la mémoire 31 ;
- autorisation (310) du débit si le montant 36 à débiter est inférieur ou égal à la valeur résiduelle 39 ;
- sélection (311) des champs $32_A$, $32_B$ dans lesquels peuvent être programmés la ou les combinaisons binaires déterminées auparavant ;
- programmation (312) des éléments binaires des champs sélectionnés.

Par exemple, à un journal coûtant 5,20 F correspond un montant 36 égal à 52 unités. La première table de codage $33_A$ indique que la combinaison binaire associée est 0111.

De même, pour un montant de 70 unités, la seconde table de codage $33_B$ indique que la combinaison binaire associée est 01010.

Enfin, pour un montant de 140 unités, il faut deux combinaisons binaires dont la somme des valeurs correspondantes donne 140. On prend, par exemple, 50 unités pour la première valeur et 90 unités pour la seconde valeur. D'après les première et seconde tables de codage $33_A$ et $33_B$, les combinaisons correspondantes sont 0101 et 11110.

Lorsque le débit est autorisé (310), si le montant correspondant est inférieur ou égal à la plus grande valeur codable dans un champ de N = 4 e.b., on parcourt la mémoire 31 en partant de la partie haute (réservée à ce type de champs), à la recherche du premier champ "vide" de N = 4 e.b. de la zone frontière $32_C$.

Dans le cas contraire, on parcourt la mémoire 31 en partant de la partie basse de la mémoire (réservée aux champs de N + 1 = 5 e.b.), à la recherche du premier champ "vide" de N + 1 = 5 e.b. de la zone frontière 32C.

Ainsi, après l'étape de programmation (312) des champs sélectionnés, il existe bien une zone frontière $32_C$ unique entre les deux types de champs $32_A$, $32_B$. La capacité de cette zone frontière $32_C$ diminue lors de chaque débit.

Dans ce troisième mode de réalisation, avec un montant minimal M1 = 46 unités, des champs $32_A$, $32_B$ de 4 ou 5 éléments binaires et une zone 31 mémoire de 160 éléments binaires, la valeur initiale de la carte est : 40 * 46 = 1 840 unités.

Cette valeur correspond à 40 débits au prix minimal de 4,60 F. Par ailleurs, cette valeur (1 840 unités pour 160 e.b.) correspond à un gain d'un facteur 11,2 (1 840/160) par rapport au codage naïf (1 840 unités pour 1 840 e.b.).

Ce troisième mode de réalisation permet donc d'augmenter la valeur initiale de la carte et facilite le choix du débit minimal.

Le nombre de champs de N et N + 1 e.b. peut être figé. Toutefois, il est avantageusement variable, le découpage en champs se faisant alors dynamiquement, en fonction des achats effectués.

Il est clair que de nombreux autres modes de réalisation de l'invention peuvent être envisagés. On peut notamment prévoir un mode de réalisation comprenant plus de deux types de champs, chaque type de champ étant associé à une table de codage.

Enfin, on peut prévoir un mode de réalisation permettant plusieurs inscriptions dans un même champ. Dans ce cas, la première inscription assure la programmation d'éléments binaires de champs sélectionnés, les inscriptions suivantes n'étant possibles que pour des combinaisons binaires ne nécessitant pas la programmation d'éléments binaires déjà programmés.

On peut bien sûr combiner les deux derniers modes de réalisation présentés dans cette description afin, par exemple, de gérer les reliquats dans le troisième cas, de gérer un débit inférieur au montant minimal M1 à un moment quelconque de la vie de la carte (et non pas seulement au début), d'augmenter le montant minimal M1, ou de permettre des petits débits exceptionnels.

## Revendications

1. Procédé de transaction, du type mettant en oeuvre au moins un dispositif de transfert (44) et au moins un objet portatif (41), ledit objet portatif (41) comportant une mémoire (1 ; 21 ; 31) composée d'un nombre fini d'éléments binaires de codage susceptibles d'être programmés de manière irréversible par ledit dispositif de transfert (44), de façon à débiter ledit objet portatif (41) d'une pluralité de montants M entiers, procédé caractérisé en ce que :
   - au moins une partie de ladite mémoire (1 ; 21 ; 31) est fractionnée en au moins deux champs ($2_0$ à $2_{39}$; $22_0$ à $22_{39}$ ; $32_A$, $32_B$) comprenant chacun plus d'un élément binaire de codage ;

- une table de codage (3 ; $23_A$ ; $23_B$ ; $33_A$ ; $33_B$) est affectée à chacun desdits champs ($2_0$ à $2_{39}$ ; $22_0$ à $22_{39}$ ; $32_A$, $32_B$), ladite table de codage associant une valeur distincte à au moins certaines des combinaisons binaires programmables dans ledit champ, le nombre de valeurs distinctes de ladite table de codage étant supérieur au nombre d'éléments binaires dudit champ, et associant une valeur nulle à la combinaison binaire correspondant à la non-programmation de tous les éléments binaires d'un champ ;
- ledit dispositif de transfert (44) débite ledit objet portatif (41), pour chaque montant M à débiter, en programmant dans un ou plusieurs desdits champs ($2_0$ à $2_{39}$ ; $22_0$ à $22_{39}$ ; $32_A$, $32_B$) des combinaisons binaires telles que la somme des valeurs associées aux combinaisons binaires programmées dans l'ensemble desdits champs après le débit est égale à la somme dudit montant M à débiter et des valeurs associées aux combinaisons binaires programmées avant ledit débit.

2.	Procédé selon la revendication 1, caractérisé en ce que chacun desdits montants M à débiter est supérieur ou égal à un montant minimal M1 prédéterminé strictement supérieur à 1, et en ce que chacune desdites valeurs distinctes est strictement supérieure à 1.

3.	Procédé selon la revendication 2, caractérisé en ce que ledit montant minimal M1 prédéterminé est choisi de façon que tous les montants entiers compris entre M1 et (2*M1)-1 puissent être débités dans un seul desdits champs ($2_0$ à $2_{39}$ ; $22_1$ à $22_{39}$; $32_A$, $32_B$).

4.	Procédé selon l'une quelconque des revendications 1 à 3, caractérisé en ce que lesdits montants M à débiter sont des fractions ou des multiples d'une unité donnée, telle qu'une unité monétaire, et en ce que ledit procédé comprend une étape préalable de détermination dudit montant M (6 ; 26 ; 36) à débiter, à partir d'une valeur (4 ; 24 ; 34) correspondante exprimée dans ladite unité donnée.

5.	Procédé selon l'une quelconque des revendications 1 à 4, caractérisé en ce qu'il comprend une étape de détermination (8 ; 28 ; 38) de la valeur résiduelle VR (9 ; 29 ; 39) dudit objet portatif (41), par soustraction de la somme des montants déjà débités à une valeur nominale VN prédéterminée dudit objet portatif (41).

6.	Procédé selon la revendication 5, caractérisé en ce que ladite valeur résiduelle VR (9 ; 29 ; 39) prend une valeur nulle, lorsque ladite soustraction donne un résultat négatif, et en ce que ledit objet portatif (41) est réputé épuisé lorsque ladite valeur résiduelle VR (9 ; 29 ; 39) est nulle.

7.	Procédé selon l'une quelconque des revendications 5 et 6, caractérisé en ce qu'il comprend une étape d'autorisation (10 ; 210; 310) d'un débit si le montant M (6 ; 26 ; 36) de celui-ci est inférieur ou égal à ladite valeur résiduelle VR (9 ; 29 ; 39).

8.	Procédé selon l'une quelconque des revendications 5 à 7, caractérisé en ce que ladite valeur nominale VN prédéterminée est sensiblement égale au produit dudit montant minimal M1 prédéterminé par le nombre C de champs ($2_0$ à $2_{39}$ ; $22_1$ à $22_{39}$ ; $32_A$, $32_B$) de ladite mémoire.

9.	Procédé selon l'une quelconque des revendications 5 à 8, caractérisé en ce que, lorsque ladite valeur résiduelle VR (9 ; 29 ; 39) est inférieure audit montant minimal M1, un dernier débit est effectué en programmant dans un desdits champs ($2_0$ à $2_{39}$) des éléments binaires de façon que ladite valeur résiduelle VR (9 ; 29 ; 39) prenne la valeur 0.

10.	Procédé selon l'une quelconque des revendications 2 à 9, caractérisé en ce que lesdites valeurs distinctes associées à au moins certaines de combinaisons binaires programmables dans un champ ($2_0$ à $2_{39}$ ; $22_1$ à $22_{39}$ ; $32_A$, $32_B$) comprenant N éléments binaires sont égales à :

$$M1 - 1 + \sum_{i=0} b_i . 2^i$$

$b_i$ représentant un desdits éléments binaires et valant 1 si ledit élément binaire est programmé et 0 dans le cas contraire.

11.	Procédé selon l'une quelconque des revendications 1 à 10, caractérisé en ce que le débit d'un montant M est effectué de façon à inscrire un nombre minimum de champs ($2_0$ à $2_{39}$ ; $22_0$ à $22_{39}$ ; $32_A$, $32_B$) et à programmer un nombre minimum d'éléments binaires.

12. Procédé selon l'une quelconque des revendications 2 à 11, caractérisé en ce qu'on prévoit au moins un champ annexe ($22_0$) affecté d'une table de codage ($23_A$) associant à au moins une des combinaisons binaires programmables dans ledit champ annexe ($22_0$) une valeur inférieure audit montant minimal M1.

13. Procédé selon la revendication 12 caractérisé en ce que ledit champ annexe ($22_0$) est utilisé pour la gestion de reliquats provenant d'autres objets portatifs.

14. Procédé selon l'une quelconque des revendications 1 à 13, caractérisé en ce que ladite mémoire (31) comporte au moins deux types de champs ($32_A$, $32_B$), comprenant respectivement N et N + 1 éléments binaires.

15. Procédé selon la revendication 14, caractérisé en ce que la structuration de ladite mémoire en champs ($32_A$, $32_B$) de N et N + 1 éléments binaires est dynamique, en fonction du nombre d'éléments binaires non programmés restant disponibles dans ladite mémoire (31) et des montants M à débiter.

16. Procédé selon les revendications 8 et 15, caractérisé en ce que ledit nombre C de champs ($32_A$, $32_B$) est égal au nombre de champs ($32_A$) comprenant N éléments binaires susceptibles d'être définis dans ladite mémoire (31).

17. Procédé selon l'une quelconque des revendications 1 à 16, caractérisé en ce que le nombre d'éléments binaires constituant chacun desdits champs ($2_0$ à $2_{39}$ ; $22_0$ à $22_{39}$ ; $32_A$, $32_B$) est compris entre 2 et 6 inclus.

18. Procédé selon l'une quelconque des revendications 1 à 17, caractérisé en ce que chacun desdits champs ($2_0$ à $2_{39}$ ; $22_0$ à $22_{39}$ ; $32_A$, $32_B$) ne peut être inscrit qu'une seule fois.

19. Procédé selon l'une quelconque des revendications 1 à 18, caractérisé en ce que chacun desdits champs ($2_0$ à $2_{39}$ ; $22_0$ à $22_{39}$ ; $32_A$, $32_B$) est susceptible d'être inscrit plusieurs fois, la première inscription assurant la programmation d'au moins un desdits éléments binaires, et les inscriptions suivantes n'étant possibles que pour des combinaisons binaires ne nécessitant pas la programmation d'éléments binaires déjà programmés.

20. Objet portatif (41), tel qu'une carte à mémoire, mis en oeuvre dans le procédé de l'une quelconque des revendications 1 à 19.

21. Dispositif de transfert (44) mis en oeuvre dans le procédé de l'une quelconque des revendications 1 à 19.

22. Application du procédé selon l'une quelconque des revendications 1 à 19 au règlement de transactions de biens ou de services, notamment de journaux (42).

| 0 | 0 0 0 0 |
| 15 | 0 0 0 1 |
| 16 | 0 0 1 0 |
| 17 | 0 0 1 1 |
| 18 | 0 1 0 0 |
| 19 | 0 1 0 1 |
| 20 | 0 1 1 0 |
| 21 | 0 1 1 1 |
| 22 | 1 0 0 0 |
| 23 | 1 0 0 1 |
| 24 | 1 0 1 0 |
| 25 | 1 0 1 1 |
| 26 | 1 1 0 0 |
| 27 | 1 1 0 1 |
| 28 | 1 1 1 0 |
| 29 | 1 1 1 1 |

Fig. 1

Fig. 4

| 0 | 0 0 0 0 |
| 1 | 0 0 0 1 |
| 2 | 0 0 1 0 |
| 3 | 0 0 1 1 |
| 4 | 0 1 0 0 |
| 5 | 0 1 0 1 |
| 6 | 0 1 1 0 |
| 7 | 0 1 1 1 |
| 8 | 1 0 0 0 |
| 9 | 1 0 0 1 |
| 10 | 1 0 1 0 |
| 11 | 1 0 1 1 |
| 12 | 1 1 0 0 |
| 13 | 1 1 0 1 |
| 14 | 1 1 1 0 |
| 15 | 1 1 1 1 |

| 0 | 0 0 0 0 |
| 15 | 0 0 0 1 |
| 16 | 0 0 1 0 |
| 17 | 0 0 1 1 |
| 18 | 0 1 0 0 |
| 19 | 0 1 0 1 |
| 20 | 0 1 1 0 |
| 21 | 0 1 1 1 |
| 22 | 1 0 0 0 |
| 23 | 1 0 0 1 |
| 24 | 1 0 1 0 |
| 25 | 1 0 1 1 |
| 26 | 1 1 0 0 |
| 27 | 1 1 0 1 |
| 28 | 1 1 1 0 |
| 29 | 1 1 1 1 |

Fig. 2

13

Fig. 3

**Office européen des brevets**

# RAPPORT DE RECHERCHE EUROPEENNE

Numero de la demande

EP    93 46 0019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 503 423 (FLONIC)<br><br>* page 13, ligne 1 - page 21, ligne 7; figure 2 *<br>--- | 1,4-9, 11,19-22 | G07F7/08 |
| A | US-A-4 870 260 (A. NIEPOLOMSKI)<br><br>----- | | |

DOMAINES TECHNIQUES RECHERCHES (Int. Cl.5 )

G07F

Le présent rapport a été établi pour toutes les revendications

| Lieu de la recherche | Date d'achèvement de la recherche | Examinateur |
|---|---|---|
| LA HAYE | 29 JUILLET 1993 | DAVID J.Y.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

15